# EUROPEAN PATENT APPLICATION

(11) **EP 4 755 167 A1**
(43) Date of publication of application: **10.06.2026**
(21) Application number: 25212610.7
(22) Date of filing: 31.10.2025
(51) Int. Cl.: A01D 34/00, B60L 53/60, B60L 53/16, B60L 53/35

(54) **SYSTEM AND METHOD FOR CHARGING A ROBOTIC WORK TOOL**

(30) Priority: 03.12.2024 SE 2451223
(71) Applicant: Husqvarna AB, 561 82 Huskvarna (SE)
(72) Inventor: Emme, Linus, 561 82 Huskvarna (SE)

(57) **Abstract**

A system for charging of a self-propelled robotic lawnmower (1), includes a charging station (2) and a robotic lawnmower (1). The charging station (2) includes a pivoting head (4). The charging station (2) and the robotic lawnmower (1) comprise a presence sensor (7), a sensed feature (8),and second charging connectors (6). The pivoting head (4) and the robotic lawnmower (1) form an enclosure (E) around the charging connectors (6) during charging. The presence sensor (7) and the sensed feature (8) detect an opening of the enclosure (E).

A method for charging a self-propelled robotic lawnmower (1) comprises the steps of: the robotic lawnmower (1) navigating towards the charging station (2), sensing an attaining of a predetermined charging position by means of a charging position presence sensor (7) and a sensed feature (8), initiating a charging procedure once said charging position is attained, and said presence sensor (7) detecting said sensed feature (8) and interrupting the charging procedure if the presence sensor (7) no longer detects the sensed feature (8).

## Description

### Field of the invention

The present invention relates to a system for charging of a self-propelled robotic lawnmower, the system including a charging station and a robotic lawnmower, the charging station including a pivoting head, and the charging station and the robotic lawnmower each comprising one of a presence sensor and a sensed feature, configured to act with the presence sensor, respectively, and first and second charging connectors.

The invention also relates to a method for charging a self-propelled robotic lawnmower in a charging station, comprising the steps of: the robotic lawnmower navigating towards a charging position in the charging station, sensing an attaining of a predetermined charging position of the robotic lawnmower in the charging station, by means of a charging position presence sensor in one of the self-propelled robotic lawnmower and the charging station and a sensed feature associated with the other of the self-propelled robotic lawnmower and the charging station, initiating a charging procedure once said charging position is attained, and said presence sensor detecting said sensed feature in a contactless manner.

### Background

EP4083741A discloses a method and a system for charging a robotic work tool. By contactless sensing of a feature in either of charging station or a robotic work tool, the charging procedure may not be initiated until the robotic work tool is properly positioned in the charging station. Hereby a good contact between the charging connectors is ensured, and the risk of sparks forming is eliminated.

US2020/0021122A1 discloses another solution for the avoidance of sparks. The charging connectors are energized only when the mower is in the vicinity of the charging station or is docked to the charging station. A magnet in the mower and a sensor in the charging station are provided for determining the presence of the mower to the charging station.

Although these teachings solve the problem of not starting the charging procedure until the robotic work tool has reached its proper position, they do not address the problem of accidental manual access to the charging connectors when they are live during charging. In order to maintain safety, the charging station, like many prior art charging stations only supply a maximum voltage of 42.2 V, a level which has been deemed safe according to legislature and safety standards.

However, there may be a desire to use higher voltages, since the charging procedure may be faster, and hence larger areas may be maintained with one single mower. At the same time, the charging procedure should not entail a manual connection and disconnection of the charging connectors, but the charging procedure should remain automated. Hence there is a need for a safe charging at higher voltages.

### Summary

It is an object of the present invention to solve, or at least mitigate, parts or all of the above-mentioned problems. To this end, there is provided a system wherein the pivoting head and the robotic lawnmower are arranged to form an enclosure around the charging connectors, when the robotic lawnmower is in its charging position during charging, and one of the presence sensor and the sensed feature is arranged in the pivoting head of the charging station, for detection of an opening of the enclosure.

Hereby an increased safety for users and bystanders may be attained, since an opening of the enclosure is undesired for safety reasons. The measures taken by the system, when an opening is detected, may vary from letting an alarm go off to rendering the charging station entirely powerless until a manual reset has been performed. The enclosure may be a virtual volume. Any small gaps between the charging station and the robotic lawnmower in the charging position should be narrow enough to block manual access from the outside to the charging connectors that may be live.

Alternatively, or additionally, the distance from the outside to the live charging connectors, via the gaps, may be longer than human fingers, such that access is obstructed thereby. As an additional safety measure, the gaps may be at least partially labyrinthic, to further obstruct accidental access via narrow, rigid objects, such as screwdrivers, spanners etc.

Preferably, the charging station is arranged to reduce the voltage on the charging connectors when an opening of the enclosure is detected.

The voltage may be reduced to 0V, i. e. completely cut off, or at least reduced to below 42.2 V. This voltage level is, at present, defined as a maximum voltage level for exposed charging means. In case of changes in standards and applicable laws, other levels may be designated as safe maximum levels. In such cases the charging station may be easily adapted to work according to the invention with an adjusted maximum voltage level. The reduction or complete cut-off may be attained by directly coupling the presence sensor and sensed feature to the charging connectors. The coupling may be galvanic, inductive, or capacitive, such that the power to the charging connectors is directly interrupted when the presence sensor no longer detects the sensed feature on an opening of the enclosure.

Alternatively, or additionally, the sensor may produce a warning signal to a control unit which controls the current to the charging connectors. When the control unit receives such a warning signal, it will immediately issue instructions to cut off or reduce the current to a predetermined level.

As an alternative to reducing the voltage, a power limiter may be provided and automatically connected to the charging circuit as soon as an opening of the enclosure is detected. Hereby the current may be limited to safe levels, although the voltage remains the same. However, depending on standards and applicable laws, this alternative may not be a viable option on all markets for the product.

The sensor and the sensed feature may be based on any of a number of technologies. For example, the sensors may be ultrasound sensors, pressure sensors, weight sensors, accelerometric sensors, inertia sensors, capacitive sensors, optical sensors, sensors measuring currents, magnetic sensors (including Hall sensors), sensors for RFID- or NFC-tags, gyroscopic sensors, etc. The sensed feature may in each case be a feature matching the sensor.

In some embodiments the presence sensor is arranged in the charging station.

Hereby, the presence sensor may be easily and directly connected to the charging connectors, in order to easily effect a reduction of the charging voltage, if an opening of the enclosure is detected.

In some embodiments the presence sensor is a Hall sensor, and the sensed feature is a magnet.

Hereby a simple and cost-effective set of a sensor and a sensed feature may be attained.

In some further embodiments the presence sensor is a 3D magnetic sensor.

According to a second aspect, parts or all of the above-mentioned problems are solved, or at least mitigated, by a method wherein the charging procedure is interrupted if the presence sensor no longer detects the sensed feature.

Hereby a charging procedure, including the provision of power to charging connectors in the charging station, may neither start nor continue unless the robotic lawnmower as well as the charging station are correctly positioned. A correct positioning refers both to the relative positions of the charging station and the robotic lawnmower as well as the positions of all relevant moving parts of the charging station and the robotic lawnmower. A great degree of safety may be provided, in particular to an unskilled user, since the charging may stop, and the charging connectors may be rendered powerless when they are exposed and accessible.

Preferably, the presence sensor is arranged in the charging station and initiates and interrupts said charging procedure.

Hereby the sensor and the charging connectors may be arranged close to one another, and the communication between them may be direct and simple, such that the initiation and any sudden interruptions of the charging procedure may be performed quickly and reliably.

In further embodiments sensing is based on emanated magnetic fields.

Hereby the sensed feature, as such, may be independent of light, electricity, human intervention, etc. The presence sensor may use electrical power and be electrically coupled to the charging connectors, since the charging as such is electrical. Also, in case the battery is depleted before the robotic lawnmower reaches the charging station, the robotic lawnmower may simply be pushed into the charging station, and the charging may be initiated as soon as the sensor detects the magnetic sensed feature, which is independent of the battery status, in the robotic lawnmower. As an alternative, the sensed feature may be dependent on electric currents, which in their turn emanate electric fields, which may be sensed by the sensor.

The sensor may simply detect the presence of a magnetic component, or it may be configured to detect a movement thereof.

In some further embodiments, the sensing of the sensed feature comprises continuously sensing a magnetic field and allowing the charging procedure only as long as the sensed magnetic field is above a threshold value.

Hereby the charging may take place only when the sensor and the sensed feature are in the correct positions relative to one another. If either the sensor or the sensed feature is brought out of their intended positions during charging, it may mean that either the robotic lawnmower or the charging station is brought out of their respective positions that are safe for charging. The charging may be stopped, or the charging voltage lowered to a safe level, if the level of the sensed magnetic field is too low, i. e. if the charging is no longer taking place under safe conditions.

It is noted that embodiments of the invention may be embodied by all possible combinations of features recited in the claims. Further, it will be appreciated that the various embodiments described for the device are all combinable with the method as defined in accordance with the second aspect of the present invention, and vice versa.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
- Fig. 1: is a diagrammatic view in perspective of a robotic lawnmower docked into a charging station; and
- Fig. 2: is a sectional side view of the robotic lawnmower and the charging station according to Fig. 1.

All the figures are schematic, not necessarily to scale, and generally only show parts which are necessary in order to elucidate the embodiments, wherein other parts may be omitted.

### Detailed description of the exemplary embodiments

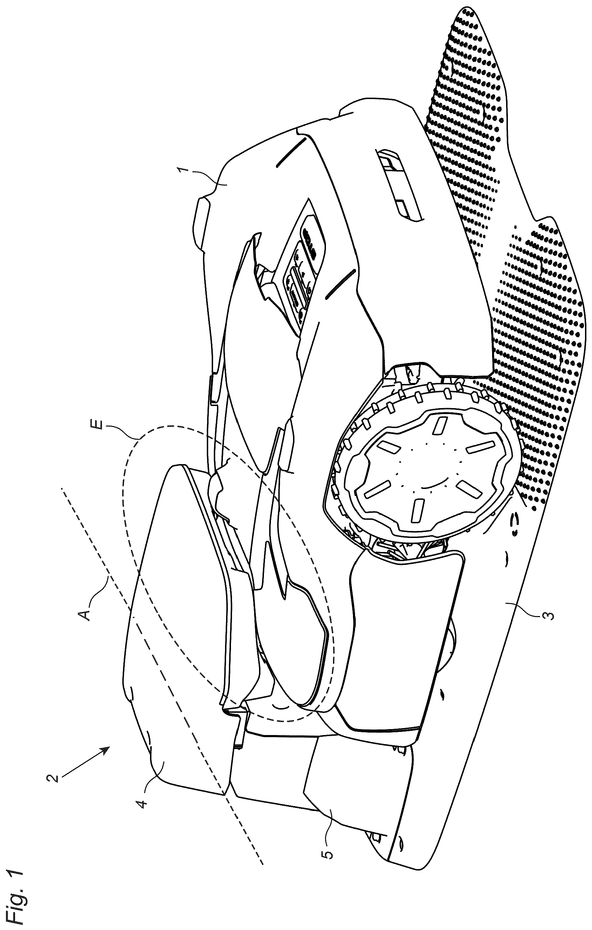

Fig. 1 illustrates a robotic lawnmower 1, which is positioned for charging in a charging station 2. The charging station 2 may comprise a base plate 3, which in its turn may comprise means, such as electrical wiring emanating electrical fields, for allowing the robotic lawnmower 1 to navigate securely into the charging station 2. The charging station 2 further comprises a charging head 4, wherein charging connectors, or plates, (not shown in Fig. 1) are arranged for contact with corresponding charging connectors on the robotic lawnmower 1. The charging head 4 and the base plate 3 (if any) are interconnected by a post 5, which is arranged to hold the charging head 4 at a predetermined distance from the ground or from the base plate 3, such that the robotic lawnmower 1 may fit snugly under the charging head 4, and the respective charging connectors may contact one another, when the robotic lawnmower 1 is docked into the charging station 2. The charging head 4 may be pivotably arranged on the post 5, such that the charging connectors or other components of the charging station 2 may be accessible for service. The pivot axis A may e. g. be approximately vertical or approximately horizontal. If approximately horizontal, the pivot axis A may extend in the longitudinal direction of the robotic lawnmower 1 or in its transversal direction.

As seen in Fig. 1, the lower contours of the charging head 4 are approximately complementary to the upper contours of the robotic lawnmower 1. When the robotic lawnmower 1 is docked into the charging station 2, the close fit allows only a very narrow space between the charging head 4 and the robotic lawnmower 1. Hereby an enclosure E is formed, into which there is no manual access. Although there are narrow gaps between the charging head 4 and the robotic lawnmower 1, they do not allow a hand, or even fingers, to access the inner areas of the enclosure E. The enclosure E hence encompasses a volume into which a human hand is unable to reach. Inside of the enclosure E, protected from outside access are the respective charging connectors of the robotic lawnmower 1 and of the charging station 2, when they are in contact with one another. This means that they are blocked from access from the outside during the charging of the robotic lawnmower 1. When the robotic lawnmower 1 is not docked into the charging station 2, the charging connectors are indeed accessible, but, according to the present disclosure, they are not energized at this time with a voltage higher than a legal limit, typically 42.2 V. In many practical embodiments, they may not be energized at all, i. e. the voltage is 0 V.

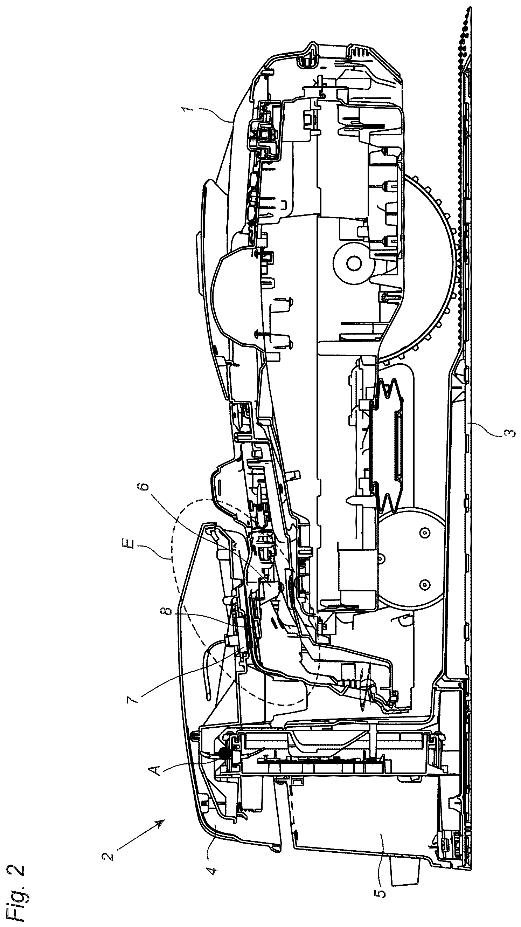

Fig. 2 illustrates a sectional view of the lawnmower 1 in the charging position in the charging station 2. In this figure the charging connectors 6 are at least partly visible. The charging connectors 6 may, in general, comprise at least one connector 6 providing a voltage in the charging station 2, and at least one mating connector 6 receiving the charge in the robotic lawnmower 1. In many embodiments there is a pair of connectors 6 in both the charging station 2 and the robotic lawnmower 1, respectively. In some embodiments, a pair of connectors 6, in either or both of the charging station and the lawnmower, may be arranged in a single unit.

The charging connectors 6 in the charging station 2 may, in some embodiments, be arranged on, or as, a protrusion, while the mating connectors 6 in the lawnmower 1 are arranged in an indention or a recess, or vice versa.

Once the robotic lawnmower 1 is docked into the charging station 2 properly, the charging connectors 6 will be in close mutual contact, and the charging procedure may start. During charging the charging voltage may exceed the limit of 42.2 V, since the charging connectors 6 are not accessible. However, if the robotic lawnmower 1 is moved from its charging position, or if the enclosure E is opened, the voltage must be lowered to a level which is lower than the prescribed limit.

In order to detect an absence of the lawnmower 1 from the correct charging position or an opening of the enclosure E, there may be arranged a presence sensor 7 in one of the lawnmower 1 and the charging head 4, and a sensed feature 8 in the other one. Both the lawnmower 1 and the charging head 4 have to be in their respective positions for charging, in order to have a safe, completely closed enclosure E. In some advantageous embodiments, the presence sensor 7 is arranged in the charging head 4 and the sensed feature 8 is arranged in the lawnmower 1. When the presence of the sensed feature 8 is detected by the presence sensor 7, one may draw the conclusion that the lawnmower 1 is in its charging position and that the enclosure E is closed. If the lawnmower 1 were to move out of the charging position, the presence of the sensed feature 8 would no longer be sensed by the presence sensor 7, and the conclusion may be drawn that the charging connectors 6 may be exposed. In such a case, the charging voltage, if any, must be lowered to a level below the legal safety limit of 42.2 V. Another possible scenario is that the charging head 4 is pivoted away from its aligned charging position, which is shown in the figures. In that case also, the presence sensor 7 would no longer sense the presence of the sensed feature 8, and the conclusion may be drawn that the enclosure E is open, and the charging connectors 6 are exposed.

The detection of the risk that the charging connectors 6 are exposed is ensured regardless of whether the presence sensor 7 or the sensed feature 8 has moved out of its intended charging position, since there would be a risk of exposure of the charging connectors 6 in both of these cases.

In some embodiments the presence sensor 7 is of another type than a sensor sensing the presence of a magnet. For instance, the sensor 7 may be configured to sense a movement of a magnet 8 instead of, or in addition to, sensing the presence of the magnet 8.

Another option is that the sensor 7 is an ultrasound sensor sensing the distance e.g. to the mower 1. A change in distance indicates that the charging head 4 or the mower 1, or possibly both, are not in their correct positions for charging.

A lifting of the charging head 4 may also be detected by a pressure sensor sensing a change of pressure, which would indicate that the charging head 4 is lifted.

Sensors detecting an acceleration or an inclination of the charging head 4 may be used for detecting that the charging head 4 is lifted.

Capacitive sensors may be used for detecting the presence or absence of a sensed feature in the vicinity of the sensor.

Optic sensors may be used to identify whether the charging head is lifted or not and whether the mower 1 is in the correct charging position. Visual identifiers e.g. on the mower 1 may be used as the sensed feature. A ray of light, in particular infrared light, may be used as the sensed feature to ensure that there is an unbroken line between the sensor and the sensed feature.

Radio frequency identification (RFID) or near field communication (NFC) may be used for ensuring that a sensor and a tag are sufficiently close to one another to indicate a closed enclosure E. The ultimate consequence of exposing the charging connectors 6, in an open enclosure E, is that the power to the charging connectors 6 is lowered or completely cut off. This may be effected by different methods. The methods may be combined or be used independently of one another in redundancy as a safety measure.

One method is that the sensor sends a signal wirelessly or by wires to a control unit controlling the power supply. The control unit may, in its turn, reduce the voltage level or cut off the power completely. This method may be particularly useful in embodiments where the presence sensor 7 is located in the lawnmower 1 and a wireless signal may be sent to a control unit located in the charging station 2. Another method is that the presence sensor 7, is, directly or indirectly, coupled to the charging connectors 6 either galvanically, inductively, or capacitively, such that the power to the charging connectors 6 is immediately interrupted when the presence sensor 7 no longer detects the sensed feature 8 on an opening of the enclosure E or when the lawn mower is no longer in its correct position. It is not possible to start or maintain a charging procedure unless the presence sensor 7 detects the presence of the sensed feature 8 at a sufficiently close distance.

The detection of the sensed feature 8 may, in some practical embodiments, not be a definite "yes/no" type of detection. In many cases, the removal of the sensed feature 8 from the presence sensor 7, or vice versa, may take place gradually. For example, when the robotic lawnmower 1 is only partly in its correct charging position, the sensed feature may be detected to a lower extent, e. g. the outermost part of a magnetic field is detected before the lawnmower 1 has finished moving into the charging position in the charging station 2. Also, there is the risk that the lawnmower 1 accidentally moves slightly out of its position, or that the charging head 4 is pivoted towards its open position only slightly. To ensure that any misalignments of the charging head 2 and the lawnmower 1 do not pose a hazard to the user, there is a threshold limit for how strongly the sensed feature 8 must be detected by the presence sensor 7, e. g. a threshold value for the magnetic field strength, for safety in a case where the sensed feature 8 is a magnet. By detecting a value above the threshold value, it is ensured that the presence sensor 7 and the sensed feature 8 are sufficiently close to one another to allow the charging connectors 6 to be fully energized. Hereby any small misalignments of the lawnmower 1 as well as any openings of the charging head 4 are detected, and the charging connectors 6 are guarded from access when they are in an energized state. In some embodiments, even small misalignments may allow unauthorized access to the charging connectors, and the provision of the threshold value may ensure that the full charging current is not applied unless the enclosure E is securely closed.

In some embodiments there may even be a time delay between the moment when the presence of the sensed feature 8 is detected by the presence sensor 7 and the moment when the voltage on the charging connectors 6 exceeds the legal limit, e. g. 42.2 V, in order to make sure that the presence is of a stable character. Hereby the risk of unintentional sparks forming is reduced. However, there is no delay when the voltage must be reduced due to an opening of the enclosure E.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. System for charging of a self-propelled robotic lawnmower (1), the system including a charging station (2) and a robotic lawnmower (1), the charging station (2) including a pivoting head (4), and the charging station (2) and the robotic lawnmower (1) each comprising one of a presence sensor (7) and a sensed feature (8), configured to act with the presence sensor (7), respectively, and first and second charging connectors (6), respectively, wherein the pivoting head (4) and the robotic lawnmower (1) are arranged to form an enclosure (E) around the charging connectors (6), when the robotic lawnmower (1) is in its charging position during charging, and one of the presence sensor (7) and the sensed feature (8) is arranged in the pivoting head (4) of the charging station (2), for detection of an opening of the enclosure (E).

2. System according to claim 1, wherein the charging station (2) is arranged to reduce the voltage on the charging connectors (6) when an opening of the enclosure (E) is detected.

3. System according to claim 1 or claim 2, wherein the presence sensor (7) is arranged in the charging station (2).

4. System according to any of claims 1 to 3, wherein the presence sensor (7) is a Hall sensor, and the sensed feature (8) is a magnet.

5. System according to any of claims 1 to 3, wherein the presence sensor (7) is a 3D magnetic sensor.

6. Method for charging a self-propelled robotic lawnmower (1) in a charging station (2), comprising the steps of:
the robotic lawnmower (1) navigating towards a charging position in the charging station (2),
sensing an attaining of a predetermined charging position of the robotic lawnmower (1) in the charging station (2), by means of a charging position presence sensor (7) in one of the self-propelled robotic lawnmower (1) and the charging station (2) and a sensed feature (8) associated with the other of the self-propelled robotic lawnmower (1) and the charging station (2),
initiating a charging procedure once said charging position is attained, and
said presence sensor (7) detecting said sensed feature (8) in a contactless manner, wherein the charging procedure is interrupted if the presence sensor (7) no longer detects the sensed feature (8).

7. Method according to claim 6, wherein the presence sensor is arranged in the charging station and initiates and interrupts said charging procedure.

8. Method according to claim 6 or claim 7, wherein sensing is based on emanated magnetic fields.

9. Method according to claim 8, wherein the sensing of the sensed feature (8) comprises continuously sensing a magnetic field and allowing the charging procedure only as long as the sensed magnetic field is above a threshold value.
